# EUROPÄISCHE PATENTSCHRIFT

(11) **EP 0 362 681 B1**
(45) Veröffentlichungstag und Bekanntmachung des Hinweises auf die Patenterteilung: **14.04.1993**
(21) Anmeldenummer: 89117851.9
(22) Anmeldetag: 27.09.1989
(51) Int. Cl.: B09B 3/00

(54) **Verfahren zur Entsorgung anorganischer Rückstände**
Method for the disposal of inorganic residues
Méthode pour l'élimination des résidues inorganiques

(30) Priorität: 06.10.1988 DE 3834051; 10.05.1989 DE 3915352; 30.06.1989 DE 3921645
(43) Veröffentlichungstag der Anmeldung: 11.04.1990
(73) Patentinhaber: Edelhoff Entsorgung Nord GmbH & Co., D-49565 Bramsche (DE)
(72) Erfinder: Van Hulle, Arno Cyriell Nathalia, D-4512 Wallenhorst (DE); Preuschoff, Reinhard, D-5860 Iserlohn 7 (DE)
(74) Vertreter: Gossel, Hans K., Dipl.-Ing.

(56) Entgegenhaltungen:
- EP-A- 0 130 854
- AT-B- 385 215
- DE-A- 3 126 200
- DE-A- 3 327 770
- DE-A- 3 420 171
- DE-A- 3 626 448

## Beschreibung

Die Erfindung betrifft ein Verfahren zur Entsorgung anorganischer Rückstände, vorzugsweise von Abfallstoffen, die aus Säureresten und/oder Salzen und/oder aus alkalischen Rückständen und/oder aus Zyaniden und/oder zyanidhaltigen Rückständen und/oder aus Ammoniak und/oder ammoniakhaltigen Rückständen bestehen oder diese enthalten.

Anorganische Rückstände dieser Art müssen wegen ihrer Gefährlichkeit als Sonderabfall entsorgt werden. Bisher war es üblich, jeden einzelnen anorganischen Rückstand mit Kalkmilch zu mischen und reagieren zu lassen und anschließend die Mischung in Behälter abzufüllen und zu entsorgen. Dieses bekannte Verfahren ist umständlich, zeitraubend und daher auch besonders kostspielig.

Aufgabe der Erfindung ist es, ein Verfahren der eingangs angegebenen Art an die Hand zu geben, durch welche sich die anorganischen Rückstände in wirtschaftlicher und sicherer Weise entsorgen lassen.

Erfindungsgemäß wird diese Aufgabe bei einem Verfahren der gattungsgemäßen Art dadurch gelöst, daß die Rückstände unter Zugabe von Calciumhydroxid (Löschkalk) und gegebenenfalls Wasser gemischt werden, daß die Mischung nach Ablauf einer Zeit, in der eventuelle Reaktionen im wesentlichen abgelaufen sind, mit einem feuchtigkeitsbindenden und annähernd neutralen Zuschlagstoff derart gemischt wird, daß ein im wesentlichen pulveriges und trockenes Mischgut entsteht, und daß das pulverige Mischgut in Behälter gefüllt und die Behälter einer Zwischen- oder Endlagerung zugeführt werden.

Das erfindungsgemäße Verfahren läßt sich insofern wirtschaftlicher als bekannte Verfahren durchführen, als eine Trennung der Rückstände nach ihrer chemischen Zusammensetzung nicht erforderlich ist und die Rückstände ggf. gemeinsam in einem Mischer gemischt werden können. Dabei dient das zugegebene Calciumhydroxid, das auch als Löschkalk bekannt ist, der Neutralisierung und Bindung der Rückstände, so daß saure Reaktionen vermieden werden. Wasser wird zugemischt, wenn dadurch die beabsichtigten Reaktionen begünstigt werden. Dagegen kann die Zugabe von Wasser entfallen, wenn die Raktionen auch ohne Wasserzugabe ablaufen. Wenn die bei dem Mischvorgang zu erwartenden Reaktionen abgelaufen sind, was bei Erreichen von Temperaturkonstanz im Mischgut gegeben ist, und keine wesentlichen Nachreaktionen mehr zu erwarten sind, wird ein feuchtigkeitsbindender und annähernd neutraler Zuschlagstoff hinzugefügt, so daß ein pulveriges und trocken erscheinendes Mischgut entsteht. Die Zugabe des Zuschlagstoffes dient einerseits der Bindung überschüssiger Flüssigkeit und andererseits der mechanischen Stabilisierung der Mischung. Aufgrund ihrer sehr guten Adsorbenseigenschaften eignet sich insbesondere Kieselgur als Zuschlagstoff. Die Kieselgur nimmt die Rückstände auf und bindet diese zusätzlich gleichsam ein, so daß diese auch in mechanischer Hinsicht stabilisiert werden. Neben der Kieselgur sind aber auch andere feuchtigkeitsbindende und annähernd neutrale Zuschlagstoffe geeignet. So kann in vorteilhafter Weise auch das kostengünstige Calciumsulfat, welches allgemein auch als Gips bezeichnet wird, eingesetzt werden.

Weitere Zuschlagstoffe können Bimssteinmehl, Gasbetonmehl, oder Gemische aus diesen beiden, handelsübliche Chemikalienbinder, beispielsweise Ekoperl oder Vermiculit, Kalksteinmehl, Blähton, Aluminiumoxid, Kalkhydrat oder Dolomit (Ca CO₅/Mg CO₃) sein.

Das so gewonnene pulverige Mischgut, das im wesentlichen reaktionsfrei, neutralisiert und in bindende und aufsaugende Stoffe eingebettet ist, wird sodann in Behälter gefüllt. Diese Behälter werden anschließend einer Zwischen- und Endlagerung zugeführt.

Zweckmäßigerweise wird das pulverige Mischgut in, in Stahlbehälter eingesetzte Kunststoffbehälter oder in innen mit Kunststoff beschichtete Stahlbehälter gefüllt, die mit einem Betonmantel umgeben werden. Es ist vorteilhaft, die Behälter mit dem in diese eingefüllten Mischgut während einer Zeitspanne offen stehen zu lassen, damit eventuell ablaufende Nachreaktionen mit größter Wahrscheinlichkeit abgelaufen sind.

Die Behälter werden in vorteilhafter Weise durch Deckel verschlossen, die sich wieder öffnen lassen. Auf diese Weise ist es möglich, auch nach längerer Lagerzeit den Behältern Proben zu entnehmen und diese auf ihre Aggressivität und Gefährlichkeit hin zu überprüfen.

Die Behälter werden zweckmäßigerweise unterirdisch einer Langzeitlagerung zugeführt.

## Patentansprüche

1. Verfahren zur Entsorgung anorganischer Rückstände, vorzugsweise von Abfallstoffen, die aus Säureresten und/oder aus Salzen und/oder aus alkalischen Rückständen und/oder aus Zyaniden und/oder aus zyanidhaltigen Rückständen und/oder aus Ammoniak und/oder aus ammoniakhaltigen Rückständen bestehen oder diese enthalten,
**dadurch gekennzeichnet,**
daß die Rückstände unter Zugabe von Calciumhydroxid (Löschkalk) und gegebenenfalls Wasser gemischt werden, daß die Mischung nach Ablauf einer Zeit, in der eventuelle Reaktionen im wesentlichen abgelaufen sind, mit einem feuchtigkeitsbindenden und annähernd neutralen Zuschlagstoff derart gemischt wird, daß ein im wesentlichen pulveriges und trockenes Mischgut entsteht, und daß das pulverige Mischgut in Behälter gefüllt und die Behälter einer Zwischen- oder Endlagerung zugeführt werden.

2. Verfahren nach Anspruch 1, dadurch gekennzeichnet, daß der feuchtigkeitsbindende und annähernd neutrale Zuschlagstoff Kieselgur ist.

3. Verfahren nach Anspruch 1, dadurch gekennzeichnet, daß der feuchtigkeitsbindende und annähernd neutrale Zuschlagstoff Bimssteinmehl, Gasbetonmehl oder deren Gemisch ist.

4. Verfahren nach Anspruch 1, dadurch gekennzeichnet, daß der feuchtigkeitsbindende und annähernd neutrale Zuschlagstoff ein handelsüblicher Chemikalienbinder, wie beispielsweise Ekoperl oder Vermiculit ist.

5. Verfahren nach Anspruch 1, dadurch gekennzeichnet, daß der feuchtigkeitsbindende und annhähernd neutrale Zuschlagstoff Kalksteinmehl, Blähton, Aluminiumoxid, Kalkhydrat oder Dolomit ist.

6. Verfahren nach Anspruch 1, dadurch gekennzeichnet, daß der feuchtigkeitsbindende und annähernd neutrale Zuschlagstoff Calciumsulfat (Gips) ist.

7. Verfahren nach einem der Ansprüche 1-6, dadurch gekennzeichnet, daß die pulverige Mischung in, in den Stahlbehälter eingesetzte Kunststoffbehälter oder in innen mit Kunststoff beschichtete Stahlbehälter gefüllt und die Stahlbehälter von einem Betonmantel umgeben werden.

8. Verfahren nach einem der Ansprüche 1-7, dadurch gekennzeichnet, daß die Behälter mit zu öffnenden Deckeln verschlossen werden.

## Claims

1. Method for the disposal of inorganic residues, preferably of waste material consisting of or containing acid residues and/or salts and/or alkaline residues and/or cyanides and/or cyanid-containing residues and/or ammonia and/or ammonia-containing residues,
**characterized in**
that the residues will be mixed under the addition of calcium hydroxide (dead lime) and, if necessary, of water, that at the end of a period in which possible reactions have substantially taken place the mixture is mixed with a moisture-binding charge which is approximately neutral so that a substantially powdery and dry mixed material is obtained, and that the powdery mixed material is filled into containers and that the containers are passed to an intermediate storage or to an ultimate storage.

2. Method according to claim 1, charcterized in that the moisture-binding and approximately neutral charge is infusorial earth.

3. Method according to claim 1, characterized in that the moisture-binding and approximately neutral charge is pumice powder, gassy concrete powder or a mixture thereof.

4. Method according to claim 1, characterized in that the moisture-binding and approximately neutral charge is a commercially available chemicals binder as e.g. Ekoperl or vermiculite.

5. Method according to claim 1, characterized in that the moisture-binding and approximately neutral charge is limestone powder, swelling clay, aluminium oxide, calcium hydrate, or dolomite.

6. Method according to claim 1, characterized in that the moisture-binding and approximately neutral charge is calcium sulphate (plaster).

7. Method according to any one of claims 1-6, characterized in that the powdery mixture is filled into plastic containers inserted into the steel containers or into steel containers coated inwardly with synthetic material, and that the steel containers are surrounded by a concrete casing.

8. Method according to any one of claims 1-7, characterized in that the containers are closed with covers which can be opened.

## Revendications

1. Procédé pour l'élimination des résidus inorganiques, avantageusement des déchets qui proviennent des restes d'acides et/ou des sels et/ou des résidus alcalins et/ou des cyanures et/ou des résidus contenant du cyanure et/ou d'ammoniac et/ou de résidus contenant de l'ammoniac ou bien contiennent ceux-ci,
caractérisé en ce que
les résidus sont mélangés avec addition d'hydroxyde de calcium (chaux éteinte) et, le cas échéant, d'eau, en ce que le mélange, après un certain temps pendant lequel des réactions éventuelles peuvent se produire, est mélange à un fondant liant l'humidité et presque neutre de manière qu'il en résulte un produit de mélange pulvérulent et sec et en ce que le produit pulvérulent de mélange est introduit dans des récipients et les récipients sont conduits à un dépôt intermédiaire ou final.

2. Procédé selon la revendication 1, caractérisé en ce que le fondant liant l'humidité et presque neutre est du kieselguhr.

3. Procédé selon la revendication 1, caractérisé en ce que le fondant liant l'humidité et presque neutre est de la farine de pierre ponce, de la farine de bétongaz ou leurs mélanges.

4. Procédé selon la revendication 1, caractérisé en ce que le fondant liant l'humidité et presque neutre est un liant chimique du commerce, comme par exemple Ekoperl ou vermiculite.

5. Procédé selon la revendication 1, caractérisé en ce que le fondant liant l'humidité et presque neutre est de la farine de calcaire, de l'argile expansée, de l'alumine, de l'hydrate de chaux ou de la dolomite.

6. Procédé selon la revendication 1, caractérisé en ce que le fondant liant l'humidité et presque neutre est du sulfate de calcium (gypse).

7. Procédé selon l'une quelconque des revendications 1-6, caractérisé en ce que le mélange pulvérulent est introduit dans des récipients en matière synthétique qui sont utilisés en tant que récipients pour l'acier ou bien dans des récipients d'acier intérieurement enduits de matière synthétique et les récipients d'acier sont entourés d'une enveloppe en béton.

8. Procédé selon l'une quelconque des revendications 1-7, caractérisé en ce que les récipients sont obturés au moyen de couvercles pouvant être ouverts.
